# EUROPEAN PATENT APPLICATION

(11) **EP 3 326 983 A1**
(43) Date of publication of application: **30.05.2018**
(21) Application number: 16830593.6
(22) Date of filing: 28.07.2016
(51) Int. Cl.: C04B 35/46, C01G 23/00, H01M 4/131, H01M 4/36, H01M 4/485, H01M 4/58, H01M 10/0525, H01M 10/0562, H01M 10/0566

(54) **SINTERED BODY CONTAINING LITHIUM TITANATE AND LITHIUM LANTHANUM TITANATE, METHOD FOR PRODUCING SAME, AND LITHIUM BATTERY**

(30) Priority: 30.07.2015 JP 2015150610; 25.01.2016 JP 2016011622
(71) Applicant: Central Glass Co., Ltd., Ube-shi, Yamaguchi 755-0001 (JP)
(72) Inventor: ESAKI, Ryota, Ube City Yamaguchi 755-0001 (JP); NISHIZAKI, Tsutomu, Ube City Yamaguchi 755-0001 (JP); TAMURA, Tetsuya, Ube City Yamaguchi 755-0001 (JP)
(74) Representative: Manitz Finsterwald Patentanwälte PartmbB
(86) International application number: PCT/JP2016/072205
(87) International publication number: WO 2017/018488

(57) **Abstract**

Provided is a sintered body which is a composite of an electrode active material and an oxide-based solid electrolyte. The sintered body used is characterized by containing lithium titanate having the spinel crystal structure and/or lithium titanate having the ramsdellite crystal structure, and lithium lanthanum titanate having the perovskite crystal structure.

The sintered body can be obtained by, for example, a sintered body production method including a step for obtaining a molded body by molding a mixture of a precursor for lithium titanate and a precursor for lithium lanthanum titanate, or a mixture of lithium titanate and lithium lanthanum titanate, and a sintering step for sintering the molded body, or the like.

## Description

### TECHNICAL FIELD

The present invention relates to a sintered body wherein lithium titanate and lithium lanthanum titanate are composited and a method for producing the same, and in particular, it relates to a a sintered body which can be used as an electrode of a lithium primary battery or a lithium secondary battery and a method for producing the same and the like.

### BACKGROUND ART

Secondary batteries are utilized for portable devices such as mobile phones and notebook computers and the like, machinery for transportation such as automobiles or airplanes and the like, and electric power storage equipment such as used for electric power smoothing, and for all of these applications there is demand for increased energy density. Currently, the practical secondary battery with the highest energy density is the lithium ion battery, and research for further increasing the energy density while maintaining safety is being undertaken. As one part of this, research on an all-solid battery (a battery where a solid electrolyte is used instead of an electrolyte solution), which is a technical improvement of the lithium ion battery, is being carried out.

All-solid batteries are ones where the negative electrode, the electrolyte material, and the positive electrode constituting the battery are all solid, and therefore, by repeatedly laminating a negative electrode layer, a solid electrolyte material layer, and a positive electrode layer, it is possible to produce a battery having a series structure without using conductive wiring or the like, therefore these are considered to be applicable for automobile use or electric power storage use. Further, an all-oxide-based all-solid battery where the negative electrode active material, the solid electrolyte material, and the positive electrode active material are all oxides can be expected to be effective for safety and high temperature durability, in addition to increased energy density.

As one type of negative electrode active material of a lithium ion battery, lithium titanate Li₄Ti₅O₁₂ (also referred to as LTO) which is an oxide having a spinel-type crystal structure is known (Patent Document 1). There is almost no change in the lattice size of LTO in association with charging and discharging, and therefore, compared to a graphite-based carbon material (often used as a negative electrode of lithium ion batteries, even though it is known to expand and contract on the order of 10% in the c axis direction between the graphite layers in association with charging and discharging) and the like, is thought to have excellent properties as a negative electrode active material for all-solid batteries.

Further, as one type of negative electrode active material of a lithium ion battery, a lithium titanate (for example Li₂Ti₃O₇) having a ramsdellite-type crystal structure has been known (Patent Document 2).

On the other hand, as a solid electrolyte material layer interposed between a positive electrode layer and a negative electrode layer of an all-solid battery, the use of a sintered body of lithium lanthanum titanate Li₃ₓLa_{2/3-x}TiO₃ (0 ≤ x ≤ 1/6; also referred to as LLTO) which has a perovskite-type crystal structure and has a high lithium ion conductivity has been reported (Patent Document 3).

For the electrodes of an implemented lithium ion battery using an electrolyte solution, the electrolyte solution which permeates the space between the positive electrode and the negative electrode functions as a conduction path for the lithium ions. On the other hand, because an electrolyte solution is not used in an all-solid battery, when using a single phase of the electrode-active material as the electrode, the electrode-active material essentially could not participate in the charging and discharging. In order to form a lithium ion conductive path for the electrode active material, it has been studied to make the electrode a composite where the electrode active material and the solid electrolyte are mixed (Patent Documents 4 and 5).
Patent Document 1: Japanese Unexamined Patent Application, Publication No. 2012-104280
Patent Document 2: Japanese Unexamined Patent Application, Publication No. H11-283624
Patent Document 3: Japanese Unexamined Patent Application, Publication No. 2013-140762
Patent Document 4: Japanese Unexamined Patent Application, Publication No. 2010-033877
Patent Document 5: Japanese Unexamined Patent Application, Publication No. 2013-080637

### DISCLOSURE OF THE INVENTION

### Problems to be Solved by the Invention

The composite bodies for electrodes disclosed in Patent Documents 4 and 5, as the solid electrolyte material, use sulphide-based solid electrolyte materials comprising sulfur and lithium, which tend to have a low interface resistances. In a sintered body for an electrode, it is required that crystal grains of the electrode active material and crystal grains of the solid electrolyte material are in close contact at a low resistance interface, but there has been no report of a composited sintered body of an oxide-based solid electrolyte material and an electrode active material having excellent safety and high temperature durability.

The present invention is one made for solving such problems of the prior art, and has the objective of providing a composited sintered body of an electrode active material and an oxide-based solid electrolyte material. Further, that the oxide-based solid electrolyte material and a electrode active material are composited means that their respective crystal grains are joined, in a state wherein a lithium ion conduction path to the crystal grains of the electrode active material via the crystal grains of the solid electrolyte material is formed.

### Means for Solving the Problems

The present inventors, as a result of diligent study, discovered that by heating after molding a mixture of a precursor which becomes lithium titanate by heating and a precursor which becomes lithium lanthanum titanate by heating, or a mixture of lithium titanate and lithium lanthanum titanate, a sintered body wherein crystal grains of lithium titanate and crystal grains of lithium lanthanum titanate are joined can be obtained, and thereby arrived at the present invention.

The first embodiment of the present invention is a sintered body comprising a lithium titanate having a spinel-type crystal structure and/or a lithium titanate having a ramsdellite-type crystal structure, and a lithium lanthanum titanate having a perovskite-type crystal structure. Further, the second embodiment of the present invention is a lithium battery comprising a negative electrode which absorbs and emits lithium and a positive electrode which absorbs and emits lithium, the negative electrode and the positive electrode facing each other via a separator and being disposed in an electrolyte solution, wherein the sintered body is as the negative electrode or the positive electrode. Further, the third embodiment of the present invention is an all-solid lithium battery comprising a negative electrode layer which absorbs and emits lithium, a solid electrolyte material layer which conducts lithium, and a positive electrode layer which absorbs and emits lithium, the negative electrode layer, the solid electrolyte material layer, and the positive electrode layer being laminated in this sequence, wherein the sintered body is used as the negative electrode layer and/or the positive electrode layer. Further, the fourth embodiment of the present invention is a method for producing a sintered body, comprising a step of obtaining a molded body by molding a powder of a mixture of a precursor of a lithium titanate, and a precursor of a lithium lanthanum titanate, and a sintering step of sintering the molded body. Further, the fifth embodiment of the present invention is a method for producing a sintered body, comprising a step of obtaining a provisionally fired body by provisionally firing a mixture of a precursor of a lithium titanate, and a precursor of a lithium lanthanum titanate, a step of obtaining a molded body by molding a powder of the provisionally fired body, and a sintering step of sintering the molded body. Further, the sixth embodiment of the present invention is a method for producing a sintered body comprising a step of obtaining a molded body by molding a powder of a mixture of lithium titanate and lithium lanthanum titanate, and a sintering step of sintering the molded body.

### Effects of the Invention

According to the present invention, it is possible to provide a composited sintered body of an electrode active material and an oxide-based solid electrolyte material.

### BRIEF DESCRIPTION OF THE DRAWINGS

FIG. 1 is a flowchart of a method of producing the sintered body through the first method for producing a precursor.
FIG. 2 is a flowchart of a method of producing the sintered body through the second method for producing a precursor.
FIG. 3 is a flowchart of a method of producing the sintered body through the third method for producing a precursor.
FIG. 4 is a flowchart of a method of producing the sintered body through the fourth method for producing a precursor.
FIG. 5 is a powder X-ray diffraction pattern of the precipitate and the precursor according to the Example 1.
FIG. 6 is a powder X-ray diffraction pattern of the sintered body according to Examples 1-1 to 1-4.
FIG. 7 is a powder X-ray diffraction pattern of the sintered body according to Example 1-5.
FIG. 8 is a scanning electron micrograph of the sintered body according to Examples 1-1, and 1-3.
FIG. 9 is a powder X-ray diffraction pattern of the sintered body according to Example 2-4.
FIG. 10 is a powder X-ray diffraction pattern of the sintered body according to Example 4.
FIG. 11 is a powder X-ray diffraction pattern of the sintered body according to Example 5-3.

### PREFERRED MODE FOR CARRYING OUT THE INVENTION

Below, the method for producing the sintered body of the present invention is explained in detail.

### Sintered Body

The sintered body according to the present invention comprises a lithium titanate having a spinel-type crystal structure and/or a lithium titanate having a ramsdellite-type crystal structure, and a lithium lanthanum titanate having a perovskite-type crystal structure. Namely, the sintered body may comprise any one of a lithium titanate having a spinel-type crystal structure and a lithium titanate having a ramsdellite-type crystal structure, or may comprise both of them.

The lithium titanate having a spinel-type crystal structure is, for example, Li₄Ti₅O₁₂. A part of the elements constituting the lithium titanate may be substituted with other elements, and other elements may be doped.

The lithium titanate having a ramsdellite-type crystal structure is, for example, Li₂Ti₃O₇. A part of the elements constituting the lithium titanate may be substituted with other elements, and other elements may be doped. As the lithium titanate having a ramsdellite-type crystal structure, besides Li₂Ti₃O₇, a large number of other substances are known, such as LiTi₂O₄ and the like, and solid solutions thereof, for example a solid solution of Li₂Ti₃O₇ and LiTi₂O₄ and the like, are also known.

Further, the lithium lanthanum titanate having a perovskite-type crystal structure, for example, is a lithium lanthanum titanate shown by the general formula Li₃ₓLa_{2/3-x}TiO₃ (0 < X ≤ 1/6). A part of the elements constituting the lithium lanthanum titanate may be substituted with other elements, and other elements may be doped.

The identification of the lithium titanate and lithium lanthanum titanate may be carried out using the X-ray diffraction method. The sintered body according to the present invention is characterized in comprising both of lithium titanate and lithium lanthanum titanate, and is characterized in that, in the X-ray diffraction pattern of the sintered body, the ratio of the strongest line intensity of the lithium titanate and the strongest line intensity of the lithium lanthanum titanate is 100 times or less. Namely, the strongest line intensity I_{S} of the lithium titanate having a spinel-type crystal structure, and the strongest line intensity I_{R} of the lithium titanate having a ramsdellite-type crystal structure, and the strongest line intensity Ip of the lithium lanthanum titanate having a perovskite-type crystal structure, preferably have the relationship of (Is + I_{R})/I_{P} = 0.01 to 100, more preferably 0.02 to 50, and even more preferably 0.05 to 20. Further, in the case of using the CuK α line, usually, the strongest line of the lithium titanate having a spinel-type crystal structure is present at 17º to 19º, the strongest line of the lithium titanate having a ramsdellite-type crystal structure is present at 19º to 21º, and the strongest line of the lithium lanthanum titanate having a perovskite-type crystal structure is present at 32º to 34º.

The mole ratio of the titanium and lanthanum included in the sintered body is preferably La/Ti = 0.0001 to 0.66, and is more preferably La/Ti = 0.0001 to 0.5 in order to stimulate the generation of lithium titanate, and in order to ensure sufficient charging/discharging electric capacity is even more preferably La/Ti = 0.05 to 0.2. Lithium lanthanum titanate has lithium ion conductivity, therefore, by including a prescribed amount of lanthanum in the sintered body, a lithium lanthanum titanate network is formed in the sintered body, which can assist the movement of lithium ions inside the sintered body. Further, in the case that 0.0001 ≤ La/Ti ≤ 0.66, an excess of La will not readily occur, and in addition to not readily generating an impurity phase, such as La(OH)₃ or La₂O₃ or La₂Ti₂O₇ or the like, besides the lithium lanthanum titanate having a perovskite-type crystal structure when sintering, the lithium lanthanum titanate phase will not be too small, and it is easy to sufficiently obtain the effect of an improved lithium ion conductivity.

The actual density of the sintered body is preferably 2.5 g/cm³ or more, more preferably 2.8 g/cm³, and even more preferably 3.0 g/cm³. The higher the actual density, the less vacant space there is in the sintered body, and a higher lithium ion conductivity can be achieved. The upper limit of the actual density of the sintered body is not particularly limited, and for example may be 6.0 g/cm³, or may be 5.0 g/cm³.

The lithium ion conductivity of the sintered body at 25ºC is preferably 1 x 10⁻⁸ S/cm or more, more preferably 5 x 10⁻⁸ S/cm or more, and even more preferably 1 x 10⁻⁷ S/cm or more. In the present invention, the lithium ion conductivity means the value evaluated using a nonblocking electrode measurement method wherein the sintered body is measured using a cell wherein the sintered body is sandwiched by metal lithium electrodes via a separator comprising an electrode solution. The upper limit of the lithium ion conductivity of the sintered body at 25ºC is not particularly limited, and for example, may be 1 x 10⁻² S/cm or less, or may be 1 x 10⁻³ S/cm or less.

When using the sintered body as an electrode for a lithium battery, the thickness of the sintered body in the form of a plate or sheet is preferably 3 pm or more. If the sintered body is thin, electric charging and discharging can often become possible even with single phase lithium titanate, and therefore, the present invention is effective particularly when sintered body is thicker. In order to obtain sufficient electric charging and discharging capacity, the thickness of the sintered body is more preferably 5 pm or more, even more preferably 10 pm or more, and particularly preferably 30 pm or more. On the other hand, if the thickness is 1 mm or less, the resistance does not readily become large, therefore this is preferable.

In a lithium battery wherein a negative electrode which absorbs and emits lithium and a positive electrode which absorbs and emits lithium face each other via a separator disposed in an electrolyte solution, it is possible to use the sintered body according to the present invention as the negative electrode or the positive electrode. Further, it may also be as a lithium ion polymer battery wherein the electrolyte is included in a polymer and gelled. Further, using a solid electrolyte material layer instead of an electrolyte solution, the above described sintered body of the present invention may be used as a negative electrode layer and/or a positive electrode layer, where a negative electrode layer which absorbs and emits lithium, a solid electrolyte material layer which conducts lithium, and a positive electrode layer which absorbs and emits lithium are laminated in this sequence. Further, as the solid electrolyte material layer, a dry polymer electrolyte substance layer comprising a lithium salt in a polymer may be used.

Further, the lithium titanate is often used as the negative electrode active material of a lithium ion secondary battery, but it may also be used as a positive electrode active material if using a counter electrode (negative electrode) material having a relatively low electric charge and discharge potential with respect to lithium titanate, such as metallic lithium, a lithium alloy, or the like. Further, the sintered body according to the present invention may also be used as an electrode of a primary battery, as a counter electrode of metallic lithium, a lithium alloy or the like. Further, in the present invention, a lithium battery comprises both of a primary battery and a secondary battery, and further comprises not only batteries using metallic lithium or a lithium alloy as the electrode, but also the battery as a whole where lithium ions move between the positive electrode and the negative electrode.

The sintered body has a constitution gathering crystal grains of lithium titanate and lithium lanthanum titanate, and the diameters of the respective crystal grains are preferably 1/3 or less of the thickness of the sintered body, more preferably 1/5 or less of the thickness of the sintered body, and even more preferably 1/10 or less of the thickness of the sintered body. The diameter of the crystal grains constituting the sintered body can be confirmed by electron microscope. The lower limit of the diameter of the above described crystal grains is not particularly limited, and for example may be 1/100,00 or more of the thickness of the sintered body, or may be 1/10,000 or more.

Further, in the sintered body of the present invention, a network of a lithium lanthanum titanate phase contributes to the conduction of lithium ions, and because a lithium ion conductive path to the lithium titanate via the network by the lithium lanthanum titanate is possible, electric charging and discharging is possible in the state of a sintered body. Accordingly, with the sintered body of the present invention processed to a thickness of 500 pm as a negative electrode or positive electrode, in a cell using an electrolyte solution, the initial charging capacity and/or initial discharging capacity of the sintered body when performing an electric charging and discharging test at a rate of 0.1 mA/cm² is preferably 10 mAh/g or more, more preferably 20 mAh/g, and even more preferably 30 mAh/g. The above mentioned capacity means the capacity per unit mass of the sintered body obtained by dividing the capacity of the above mentioned cell by the mass of the above mentioned sintered body. The above described cell, more specifically, is a cell with the sintered body of the present invention processed to a thickness of 500 pm as the negative electrode or positive electrode, and using a prescribed counter electrode and electrolyte solution, and as the prescribed counter electrode, for example, in the case that the sintered body is the negative electrode, a positive electrode comprising a positive electrode material of a lithium-comprising transition metal phosphate compound (for example, lithium iron phosphate), a lithium-comprising transition metal composite oxide (for example, LiCoO₂) and the like may be mentioned, and in the case that the sintered body is the positive electrode, a negative electrode comprising a negative electrode material such as metallic lithium, graphite or the like may be mentioned. The upper limit of the above mentioned initial charging capacity and/or initial discharging capacity is not particularly limited, and for example, may be 336 mAh/g or less, or may be 250 mAh/g or less. Further, in an all-solid type cell using a solid electrolyte material with the above described sintered body processed to a thickness of 10 pm to 150 pm as the negative electrode or the positive electrode, the initial charging capacity and/or initial discharging capacity of the sintered body when performing an electric charging and discharging test at a rate of 0.02 mA/cm² and a temperature of 60ºC is preferably 10 mAh/g or more, more preferably 20 mAh/g or more, and even more preferably 30 mAh/g or more. The above mentioned capacity means the capacity per unit mass of the sintered body obtained by dividing the capacity of the above described all-solid type cell by the mass of the above described sintered body. The above mentioned all-solid type cell, more specifically, is an all-solid type cell with the above described sintered body processed to a thickness of 10 pm to 150 pm as the negative electrode or positive electrode, and using a prescribed counter electrode and solid electrolyte, and the prescribed counter electrode is as described above. The upper limit of the above mentioned initial charging capacity and/or initial discharging capacity is not particularly limited, and for example may be 336 mAh/g or less, or may be 250 mAh/g or less.

Further, in the sintered body, in addition to lithium titanate and lithium lanthanum titanate, a conductive agent having electron conductivity may also be included. As such a conductive agent, for example, a metal such as gold, silver, copper, nickel or the like, or oxides such as tin oxide, zinc oxide, titanium oxide, indium tin oxide or the like, or a material of carbon or the like with a form of grains or fibers, rods, tubes or the like may be used. As a carbon-based conductive agent, carbon fibers, carbon black, carbon nanotubes, carbon nanofibers, graphene, graphite, and the like may be used. Further, a layer of a conductive agent may be formed on the surface of the particles of lithium titanate or lithium lanthanum titanate. The conductive agent may be mixed and added to the powder before molding, or the conductive agent may be added when producing the precursor.

### Method for Producing the Sintered Body

The method for producing the sintered body of the present invention is not particularly limited, and for example, any of a method of molding and sintering a mixture of a precursor which becomes lithium titanate or lithium lanthanum titanate when heating, and a method of molding and sintering a mixture of lithium titanate and lithium lanthanum titanate may be adopted.

Namely, the first method for producing the sintered body according to the present invention is a production method comprising a step of obtaining a molded body by molding a powder of a mixture of a precursor of lithium titanate, and a precursor of lithium lanthanum titanate, and a step of sintering the molded body. Further, the mixture of the precursors means not only the case where a precursor of the lithium titanate, and a precursor of the lithium lanthanum titanate are respectively in the form of separate particles, but also means the case where lithium titanate and lithium lanthanum titanate are generated by heating from a solid material wherein titanium, lithium, and lanthanum are incorpoated. Further, the precursor may also include crystals of lithium titanate and lithium lanthanum titanate.

Further, the second method for producing the sintered body according to the present invention is a production method comprising a step of obtaining a provisional fired body by provisionally firing a mixture of a precursor of lithium titanate and a precursor of lithium lanthanum titanate, a step of obtaining a molded body by molding a powder of the provisional fired body, and a sintering step of sintering the molded body. By carrying out the provisional firing step before the sintering step, it is possible to alleviate gas generation and mass reduction in the sintering step.

In the provisional firing step, a mixture of a precursor of the lithium titanate and a precursor of the lithium lanthanum titanate are heated at a temperature of 250ºC to 1500ºC, preferably 400ºC to 1300ºC, whereby lithium titanate and/or lithium lanthanum titanate are generated. The provisional firing may be carried out at a lower temperature to generate only lithium titanate, without generating lithium lanthanum titanate, or the provisional firing may be carried out at a higher temperature to generate both of lithium titanate and lithium lanthanum titanate.

Further, the third method for producing the sintered body according to the present invention is a production method comprising a step of obtaining a molded body by molding a powder of a mixture of a lithium titanate, for example a lithium titanate having a spinel type and/or a ramsdellite-type crystal structure, and a lithium lanthanum titanate, for example a lithium lanthanum titanate having a perovskite-type crystal structure, and a step of sintering the molded body. To obtain a mixture of the lithium titanate and the lithium lanthanum titanate, there is a method of obtaining by mixing respective powders, but the provisional fired body obtained by provisionally firing in the above described second method for producing the sintered body also corresponds thereto.

For the method of mixing the lithium titanate and the lithium lanthanum titanate, this can be obtained by mixing with a ball mixer or the like. In the case of mixing by a ball mixer or the like, a powder of the lithium titanate and a powder of the lithium lanthanum titanate are mixed in a solvent such as water or alcohol or the like, from several minutes to several tens of hours, preferably 10 min or more and it is preferable to achieve atomization and homogenization of the powder.

### [Molding Step]

The mixture of the precursor of the lithium titanate and the precursor of the lithium lanthanum titanate, or the mixture of the lithium titanate and the lithium lanthanum titanate is molded. The molding step is preferably applying a pressure to a powder of the mixture to mold in a predetermined shape. Further, a conductive agent may be added to and mixed with the powder before molding. The powder of the mixture can be put into a die, or molded into a sheet form. In the case of molding into a sheet form, for example, a method wherein the powder is dispersed in a solvent, the obtained dispersion is coated, the solvent is dried, a pressure is applied with a roll press or the like may be considered. Further, an elasticizer, binder, dispersant or the like may be added as required to the dispersion. The molding pressure in a die, for example, can be within the range of 100 MPa to 1000 MPa. For a sheet form, for example, it may be within a range of a linear pressure of 20 N/mm to 2000 N/mm. In the case of molding into a sheet form, in the molding step, a positive electrode layer and separator (solid electrolyte material) layer, or together with their precursors, may be formed with a laminate structure.

### [Sintering Step]

In the sintering step, by heating the molded body at 250ºC to 1500ºC, preferably 400ºC to 1300ºC, the constituent grains of the molded body are bonded to each other. For the sintering temperature, with a borderline in the vicinity of 1000ºC, at higher temperatures, lithium titanate having a ramsdellite-type crystal structure is readily generated, and at lower temperatures, lithium titanate having a spinel-type crystal structure is readily generated. In particular, when the sintering temperature reaches 1200ºC, almost all of the lithium titanate will be of the ramsdellite-type. In the sintering step, the heating method after molding is not particularly limited, and for example, it is possible to apply electrical resistance heating, microwave heating, and the like. Further, the molding step and the sintering step may be carried out at the same time, and publicly known sintering methods such as electric current sintering, electric discharge plasma sintering and the like may be applied. As the atmosphere during the sintering, any of an inert atmosphere such as an air atmosphere, a nitrogen atmosphere or the like, a highly oxidizing atmosphere such as oxygen or the like, a reducing atmosphere such as dilute hydrogen or the like may be used. Further, the holding time of the sintering temperature can be suitably changed depending on the sintering temperature and the like, and realistically, 24 hr or less is preferable. Further, in the case that the sintering temperature is 600ºC or more, the holding time of the sintering temperature may be a short time of 1 hr of less, and further the holding time may be made 0 min, and the heating may be stopped immediately after achieving the sintering temperature. The cooling method is not particularly limited, and may be natural cooling (in-furnace cooling), or may be cooling which is faster than natural cooling, and holding at a certain temperature during cooling may also be performed.

By this sintering step, it is possible to synthesize a sintered body where a lithium titanate having a spinel-type crystal structure which may be used as an electrode active material, and/or a lithium titanate having a ramsdellite-type crystal structure which may be used as an electrode active material, and a lithium lanthanum titanate having a perovskite-type crystal structure which may be used as a solid electrolyte material are composited. This sintered body can be used as an electrode for a lithium battery.

In the sintering step of the first method for producing the sintered body, or the provisional firing step and sintering step of the second method for producing the sintered body, namely in a step of heating a mixture of a precursor which becomes lithium titanate and lithium lanthanum titanate by heating, a change in the crystal phase and/or an increase in the crystallinity from the precursor occurs. The change in the crystal phase and/or an increase in the crystallinity can be confirmed by a powder X-ray diffraction method. In the X-ray diffraction graph, a change in the crystal phase is reflected as a change in the diffraction pattern, and an increase in the crystallinity is reflected as a reduction in the width of the diffraction line. For example, diffraction patterns which can be attributed to (Li_{1.81},H_{0.19})Ti₂O₅·H₂O [ICDD No. 00-047-0123], Li_{0.77}H_{1.23}(Ti₃O₇)·2H₂O [ICDD No. 00-040-0304], (Li₂TiO₃)_{1.333} [ICDD No. 01-075-0614] present in a precursor are eliminated by sintering, and lithium titanate having a spinel-type crystal structure, for example Li₄Ti₅O₁₂ [ICDD No. 00-049-0207], lithium titanate having a ramsdellite-type crystal structure, for example Li₂Ti₃O₇ [ICDD 00-034-0393], Li_{0.94}Ti₂O₄ [ICDD No. 01-088-0609], and lithium lanthanum titanate having a perovskite-type crystal structure, for example Li₃XLa_{2/3-x}TiO₃ (0 < X ≤ 1/6) [ICDD No. 01-074-4217, 00-046-0467, 01-087-0935, 00-046-0466 and the like] are generated.

### Method for Producing the Precursor

The mixture of the precursor of lithium titanate and the precursor of lithium lanthanum titanate used in the first or second method for producing the sintered body according to the present invention is preferably obtained using the first to fourth methods of producing the precursor, which utilize the solvothermal method described below.

The method for producing the precursor of the present invention requires at least a solvothermal treatment of a mixture comprising a Ti element source, an Li element source, and a solvent. An La source compound may be added later as in the later described second method for producing the precursor, but it is also possible to use a method for producing a precursor comprising a step of heating by a solvothermal treatment a mixture comprising an La source, a Ti source, and an Li source. This production method corresponds to a broader concept of the first method for producing the precursor, a variant of the second method for producing the precursor, the third method for producing the precursor, and the fourth method for producing the precursor. By such a solvothermal treatment step, it is possible to obtain a mixture of a precursor of lithium titanate and a precursor of lithium lanthanum titanate.

### First Method for Producing the Precursor

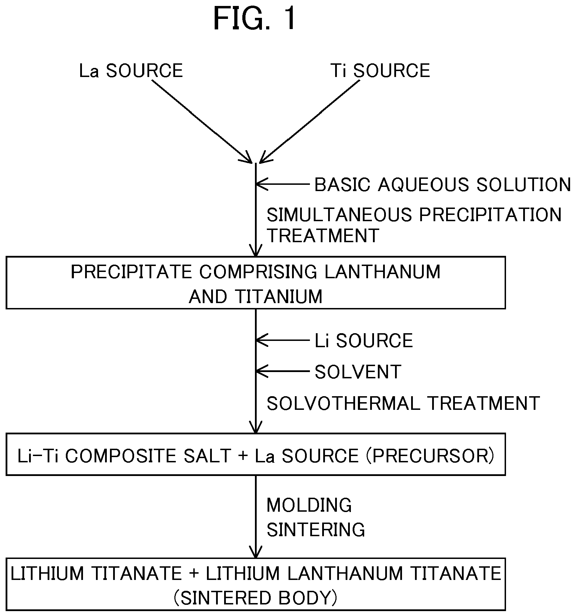

As the first method for producing the precursor according to the present invention, as shown in FIG. 1, a method for producing a precursor characterized in comprising an aqueous solution preparation step of preparing an aqueous solution comprising an La cation and a Ti cation, a simultaneous precipitation treatment step of obtaining a precipitate comprising an oxide and/or hydroxide of La, and an oxide and/or hydroxide of Ti by mixing the aqueous solution obtained in the aqueous solution preparation step and a basic aqueous solution, and a step of forming a solid material by a solvothermal treatment of a mixture comprising the precipitate obtained in the simultaneous precipitation treatment step, an Li source compound, and a solvent, may be mentioned as an example.

### [Aqueous Solution Preparation Step]

In the aqueous solution preparation step, an aqueous solution comprising an La cation and a Ti cation is prepared. As an La cation, La³⁺ may be mentioned, and as a Ti cation, Ti⁴⁺ may be mentioned. The La cation and the Ti cation may respectively form complexes with water, ammonia, oxide ions, hydroxide ions, or the later described counter-anions or the like as ligands. As the counter-anions of the La cation and the Ti cation, besides oxide ions and hydroxide ions, for example, chlorine-containing anions such as chloride ions or the like, or nitrate anions or the like may be mentioned. The above mentioned counter-anions may be used individually, or may be used in combinations of two or more.

The above mentioned aqueous solution is prepared, for example, by dissolving a lanthanum compound which produces La cations upon dissolving, and a titanium compound which produces Ti cations upon dissolving, in water or an acidic aqueous solution. As such lanthanum compounds and titanium compounds, for example, chlorides, oxychlorides, hydroxides, oxides, and nitrates and the like may be mentioned, and from the point of being easy to acquire and the point of being inexpensive, chlorides or oxychlorides are preferable. Further, from the point of being easy to dissolve, nitrates are preferable. The forms of the above mentioned lanthanum compound and titanium compound are not particularly limited, and for example, a solid such as a powder or the like, or a liquid such as an aqueous solution or the like, or the like may be mentioned. Each of the above mentioned lanthanum compounds and titanium compounds may be used individually, or in may be used in combinations of two or more.

The aqueous solution prepared in the aqueous solution preparation step preferably has a pH of less than 7, namely, it is preferably acidic. La cations have high aqueous solubility in the range from strongly acidic to weakly acidic, but Ti cations have high aqueous solubility only in the strongly acidic range. Accordingly, the aqueous solution prepared in the aqueous solution preparation step, from the viewpoint of stability, is preferably strongly acidic (for example, a pH of no higher than 3).

### [Simultaneous Precipitation Treatment Step]

In the simultaneous precipitation treatment step, a precipitate comprising an oxide and/or hydroxide of lanthanum and an oxide and/or hydroxide of titanium is obtained by mixing the aqueous solution obtained in the aqueous solution preparation step and a basic aqueous solution. The method for mixing the aqueous solution obtained in the aqueous solution preparation step and the basic aqueous solution is not particularly limited, and for example, a method for instilling or spraying the aqueous solution obtained in the aqueous solution preparation step into the basic aqueous solution may be mentioned.

The pH of the basic aqueous solution, from the viewpoint of precipitation speed, is preferably no less than 8. The basic aqueous solution is not particularly limited, and for example, ammonia water, and a lithium hydroxide aqueous solution may be mentioned. From the point of being easy to acquire and the point of being inexpensive, ammonia water is preferable. Further, from the viewpoint of preventing contamination of the solid electrolyte, it is preferable for the alkali cation to be a lithium ion, namely, a lithium hydroxide aqueous solution, whose cation constitutes the solid electrolyte, is preferable.

The molar equivalent of the base of the basic aqueous solution used in the simultaneous precipitation treatment step is preferably greater than the molar equivalent of the counter-anion (however, excluding the oxide ion and hydroxide ion) of the La cations and Ti cations in the aqueous solution obtained in the aqueous solution preparation step, and more preferably is a large excess (for example, on the order of no less than two times). If the molar equivalent of the base of the basic aqueous solution is greater than the molar equivalent of the above described counter-anion, even after having mixed the aqueous solution obtained in the aqueous solution preparation step and the basic aqueous solution, it is easy to sufficiently maintain the alkalinity of the mixed solution.

The precipitate obtained in the simultaneous precipitation treatment step is suitably isolated and washed. The isolation method is not particularly limited, and for example, centrifugation, decantation, and filtration may be mentioned. Further, the solvent used for washing is not particularly limited, and from the point of being easy to acquire and the point of being inexpensive, water may be preferably mentioned as an example.

In the aqueous solution preparation step according to the present invention, it is possible to use low cost raw materials such as chlorides and the like, instead of expensive alkoxides used in the sol-gel method. Further, the precipitate obtained in the simultaneous precipitation treatment step can prevent the large mass reduction which accompanies the removal of organic ligands or the like during sintering which arises in the sol-gel method.

### [Solvothermal Treatment Step]

In the solvothermal treatment step a precursor is obtained by mixing a solid or a solution comprising an La cation and Ti cation of the precipitate or the like obtained in the simultaneous precipitation treatment step, a lithium source compound, and a solvent, and heating under a pressure greater than atmospheric pressure.

The lithium source compound is not particularly limited, and for example, lithium carbonate, lithium chloride, lithium fluoride, lithium hydroxide, lithium nitrate, lithium acetate, and their hydrates may be mentioned. These lithium compounds may be used individually, or may be used in combinations of two or more. Further, the form of the lithium compound may be, for example, a solid such as a powder or the like, or may be an aqueous solution, and is not particularly limited.

The content ratio of La with respect to Ti in the mixture before carrying out the solvothermal treatment step is preferably La/Ti ≤ 0.66. In the case that La/Ti ≤ 0.66, more La than required for an electrode composite body comprising lithium titanate and lithium lanthanum titanate in a target mixed composition will not readily remain after firing, and therefore, impurity phases such as La(OH)₃ or La₂O₃ or La₂Ti₂O or the like, besides LTO or LLTO will not be readily generated by firing.

In the present invention, as the solvothermal treatment, a hydrothermal treatment using water as the solvent is mainly carried out. Hydrothermal treatment refers to a compound synthesis method or crystal growth method carried out under the presence of heated water at a high temperature and high pressure, and there are cases where chemical reactions which would not occur in an aqueous solution at normal temperature and normal pressure, will proceed. In the present invention, by adding an aqueous solution comprising lithium to a solid or a solution comprising La cations or Ti cations, and carrying out a high temperature and high pressure treatment, the lithium, which is soluble in water under normal temperature and normal pressure, is salt-composited with titanium, and can be incorporated into a composite salt, and the precursor is obtained by isolating this composite salt from the solvent. Further, water is used as the solvent in the hydrothermal treatment, but methods (solvothermal methods) using solvents other than water (for example, organic solvents and the like) can be expected to provide the same effects.

In the hydrothermal treatment of the present invention, it is preferable to heat for on the order of 1 to 100 hours, under an environment of an absolute pressure higher than atmospheric pressure and lower than 8.7 MPa, and a temperature of 60ºC to 300ºC, and more preferably under an environment of an absolute pressure of 0.15 MPa to 4.0 MPa, and a temperature of 60ºC to 250ºC. If the pressure and temperature are within the above range, the reaction will readily proceed, and impurities will not readily arise, and moreover, a high-grade pressure resistant vessel becomes unnecessary, thus increased production costs will not be readily incurred. Further, if the reaction time is within the above rangfe, the productivity will not be readily reduced.

### Second Method for Producing the Precursor

As the Ti source, it is possible to use microparticles (solid) comprising an oxide or hydroxide of Ti. As a method for producing the precursor according to the present invention, a method for producing the precursor characterized in comprising a solvothermal treatment step of forming a composite salt of Li and Ti by a solvothermal treatment of a mixture comprising a Ti source, an Li source, and a solvent, and a step of adding an La source to the composite salt and forming a solid material can me mentioned.

### [Synthesis Method for Microparticles (Solid) Comprising Ti]

As a synthesis method for the above mentioned microparticles (solid) comprising an oxide and/or hydroxide of Ti, there are a method for gas-phase oxidation of titanium tetrachloride, a method for treating hydrous titanium oxide first with sodium hydroxide and then with hydrochloric acid, and a methods utilizing precipitation reactions, and the like. As one example, a method utilizing a precipitation reaction is shown below. In this method, by mixing an aqueous solution comprising Ti cations and a basic aqueous solution, microparticles comprising an oxide and/or hydroxide of Ti are synthesized.

### [Aqueous Solution Preparation Step]

In the aqueous solution preparation step, an aqueous solution comprising Ti cations is prepared. The aqueous solution preparation step of the second method for producing the precursor, other than the point of not adding a lanthanum compound, is carried out in the same way as the aqueous solution preparation step of the first method for producing the precursor.

### [Precipitation Treatment Step]

In the precipitation treatment step, a precipitate comprising an oxide and/or hydroxide of titanium is obtained by mixing the aqueous solution comprising Ti cations obtained in the aqueous solution preparation step and a basic aqueous solution. The precipitation treatment step of the second method for producing the precursor is carried out in the same way as the precipitation treatment step of the first method for producing the precursor.

### [Solvothermal Treatment Step]

In the solvothermal treatment step a composite salt of Li and Ti is obtained by mixing a Ti source which is a solid comprising a Ti cation of the precipitate or the like obtained in the precipitation treatment step, a lithium source compound, and a solvent, and heating under a pressure greater than atmospheric pressure. The solvothermal treatment step of the second method for producing the precursor is carried out in the same way as the solvothermal treatment step of the first method for producing the precursor.

### [La Source Addition Step]

In the second method for producing the precursor, following the solvothermal treatment step, an addition of an La source is carried out. The La source addition step may be carried out before the composite salt is isolated from the solvent after the solvothermal treatment, or may be carried out after it is isolated from the solvent. The form of the La source, for example, may be a solid such as a powder or the like, or may be an aqueous solution, and is not particularly limited, and in the case of adding before the composite salt is isolated from the solvent, it is possible to use a lanthanum compound which dissolves in water or an acidic aqueous solution, and as such lanthanum compounds for example, chlorides, oxychlorides, hydroxides, oxides, and nitrates may be mentioned, and from the point of being easy to acquire and the point of being inexpensive, chlorides or oxychlorides are preferable. Further, as lanthanum compounds for the case of adding after isolation from the solvent, for example lanthanum oxide or lanthanum hydroxide or the like may be mentioned. The above mentioned lanthanum compounds may be used individually, or may be used in combinations of two or more.

### Variant of the Second Method for Producing the Precursor

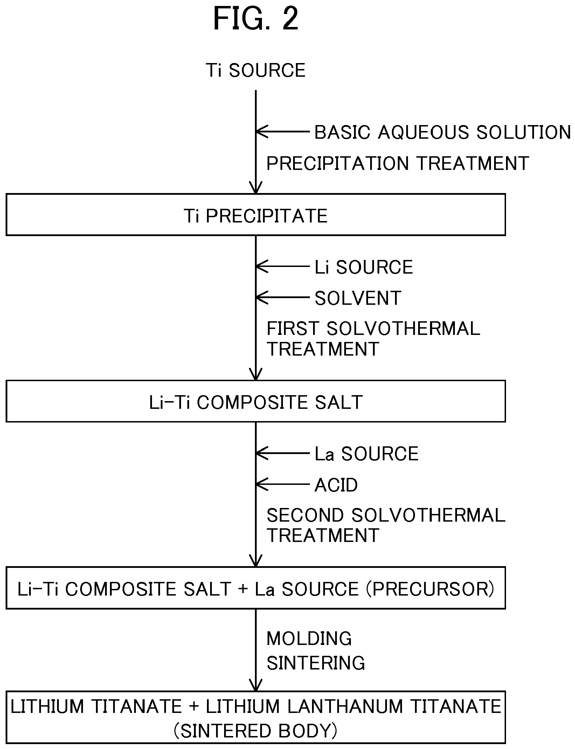

Further, in the step of forming adding an La source to the composite salt and forming a solid material, the La source may be simply mixed with the composite salt, but as shown in FIG. 2, it is also possible to form a solid material by a solvothermal treatment where the La source is added. In this case, the solvothermal treatment step which forms the composite salt of Li and Ti is made the first solvothermal treatment step, and the step which forms the solid material is made the second solvothermal treatment step.

Further, in the case of carrying out the second solvothermal treatment step, the molar ratio (Li/Ti) of the lithium with respect to the titanium inside the reaction vessel where the first solvothermal treatment is carried out is preferably 0.5 to 3.5, more preferably 0.8 to 3.0, and even more preferably 1.0 to 2.5. By supplying a sufficient lithium amount with respect to the titanium amount, it is possible to decrease the non salt-composited Ti cations. Further, a suitable amount of lithium reduces the amount eliminated by an acid in the second solvothermal treatment step, whereby an increase in the production costs is not readily incurred.

### [Second Solvothermal Treatment Step]

In the case of carrying out the second solvothermal treatment step, after adding an La source to the composite salt of Li and Ti obtained in the first solvothermal treatment step, the precursor is obtained by heating under a higher pressure than atmospheric pressure.

As the La source, it is possible to use a lanthanum compound which is soluble in water or an acidic aqueous solution, and as such lanthanum compounds, for example, chlorides, oxychlorides, hydroxides, oxides, and nitrates may be mentioned, and from the point of being easy to acquire and the point of being inexpensive, chlorides or oxychlorides are preferable. Further, from the point of being easy to dissolve, nitrates are preferable. The form of the above described lanthanum compound is not particularly limited, and for example, a solid such as a powder or the like, an aqueous solution, or the like may be mentioned. The above mentioned lanthanum compounds may be used individually, or may be used in combinations of two or more.

The second solvothermal treatment step may be executed under conditions where an acid is also added along with the La source. As the acid, it is possible to use an inorganic acid or an organic acid, and it is possible to use hydrochloric acid, nitric acid, sulfuric acid, formic acid, acetic acid and the like.

As the added amount of the acid, the difference between the molar ratio of the acid with respect to the titanium (acid/Ti) and the molar ratio of the lithium with respect to the titanium (Li/Ti) preferably satisfies 0.1 < [(Li/Ti) - (acid/Ti)] < 1.5, and more preferably satisfies 0.3 < [(Li/Ti) - (acid/Ti)] < 1.1. Further, the pH of the solution after the addition of the acid is preferably 8 to 14. By adjusting the added amount of the acid, it is possible to adjust the amount of lithium included in the solid material after the second solvothermal treatment to within the preferred range.

As a solvothermal treatment which can be used in the second solvothermal treatment step, it is possible to use the same hydrothermal treatment methods as the solvothermal treatment which can be used in the first solvothermal treatment step.

In the variant of the second method for producing the precursor which adds an acid in the second solvothermal treatment step, because a sufficient lithium amount is supplied with respect to the titanium amount in the first solvothermal treatment step, it is possible to reduce the amount of Ti cations which do not form the composite salt. As a result, it is possible to reduce impurity phases after firing, and it is also possible to make the sintered density high when carrying out sintering by heating after molding.

In the variant of the second method for producing the precursor by carrying out a first solvothermal treatment step and a second solvothermal treatment step, after having formed the Li-Ti composite salt which becomes the precursor of the LTO in the first solvothermal treatment step, a solid material which becomes the precursor of the LLTO is formed in the second solvothermal step, and therefore, it can be expected that a structure where the perimeter of the LTO is coated by the LLTO is formed in the lithium titanate composite product after firing.

### Third Method for Producing the Precursor

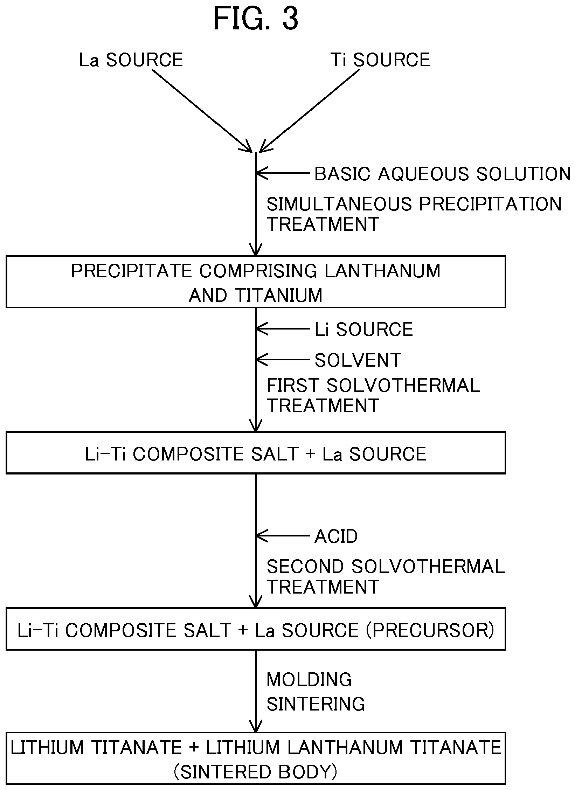

As a method for producing a precursor according to the present invention, as shown in FIG. 3, a method for producing a precursor characterized in comprising an aqueous solution preparation step of preparing an aqueous solution comprising an Li cation and a Ti cation, a simultaneous precipitation treatment step of obtaining a precipitate comprising and oxide and/or hydroxide of La, and an oxide and/or hydroxide of Ti by mixing the aqueous solution obtained in the aqueous solution preparation step and a basic aqueous solution, a first solvothermal treatment step of forming a solid material by a solvothermal treatment of a mixture comprising the precipitate obtained in the simultaneous precipitation treatment step, an Li source compound, and a solvent, and a second solvothermal treatment step of further adding an acid and forming a solid material by a solvothermal treatment.

The aqueous solution preparation step, simultaneous precipitation treatment step, and first solvothermal treatment step of the third method for producing the precursor are respectively the same procedures as the aqueous solution preparation step, simultaneous precipitation treatment step, and solvothermal treatment step of the first method for producing the precursor, but the molar ratio of the lithium with respect to the titanium (Li/Ti) in the reaction vessel for carrying out the first solvothermal treatment step is preferably from 0.5 to 3.5, more preferably from 0.8 to 3.0, and even more preferably from 1.0 to 2.5. By supplying a sufficient lithium amount with respect to the titanium amount, it is possible to reduce the non salt-composited Ti cations. Further, an amount of lithium within a suitable range reduces the amount eliminated by the acid in the second solvothermal treatment step, and therefore, an increase in production costs will not be readily incurred.

In the second solvothermal treatment step, the precursor is obtained by adding an acid to the solid material comprising an Li-Ti composite salt and an La source obtained in the first solvothermal treatment step, and heating under a higher pressure than atmospheric pressure.

As the acid, it is possible to use an inorganic acid or an organic acid, and it is possible to use hydrochloric acid, nitric acid, sulfuric acid, formic acid, acetic acid and the like.

As the added amount of the acid, the difference between the molar ratio of the acid with respect to the titanium (acid/Ti) and the molar ratio of the lithium with respect to the titanium (Li/Ti) preferably satisfies 0.1 < [(Li/Ti) - (acid/Ti)] < 1.5, and more preferably satisfies 0.3 < [(Li/Ti) - (acid/Ti)] < 1.1. Further, the pH of the solution after the addition of the acid is preferably 8 to 14. By adjusting the added amount of the acid, it is possible to adjust the amount of lithium included in the solid material after the second solvothermal treatment to within the preferred range.

As a solvothermal treatment which can be used in the second solvothermal treatment step, it is possible to use the same hydrothermal treatment methods as the solvothermal treatment which can be used in the first solvothermal treatment step.

In the third method for producing a precursor, because a sufficient lithium amount is supplied with respect to the titanium amount in the first solvothermal treatment step, it is possible to reduce the amount of Ti cations which do not form the composite salt. As a result, it is possible to reduce the impurity phases after firing, and it is also possible to make the sintered density high when carrying out sintering by heating after molding or casting.

### Fourth Method for Producing the Precursor, Solvothermal Treatment Step of Simple Salts

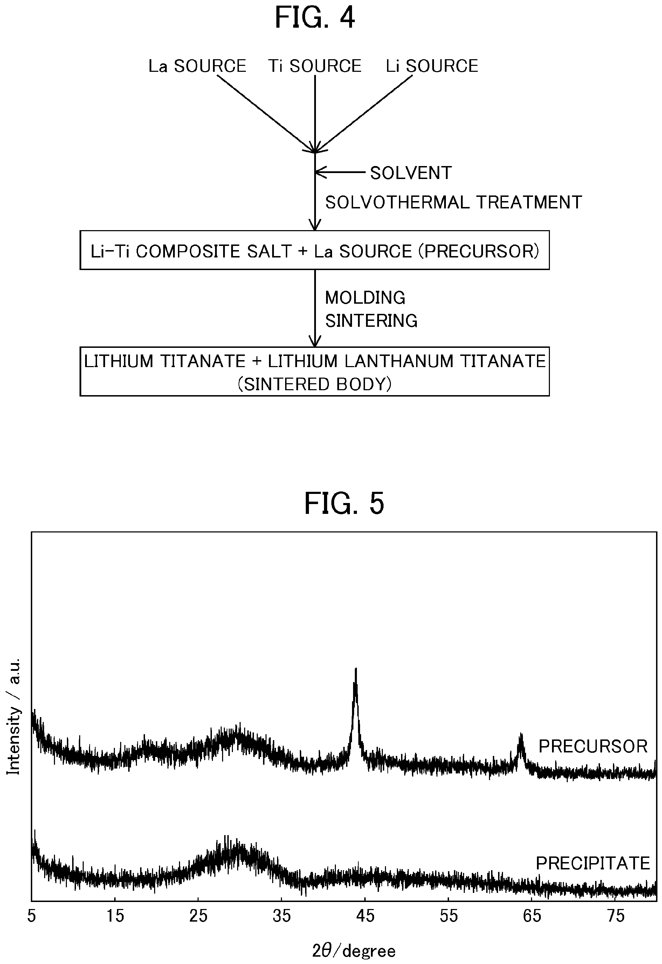

Further, the precursor according to the present invention, as shown in FIG. 4, can also provide a composite salt of Li and Ti by a solvothermal treatment step of heating under a pressure higher than atmospheric pressure a mixture comprising a single salt of La, a single salt of Ti, a single salt of Li, and a solvent. Namely, it is possible to use a single salt of La as an La source, and to use a single salt of Ti as the Ti source. Further, as the solvothermal treatment step, it is possible to carry out the same method as the solvothermal treatment for the precipitate obtained in the simultaneous precipitation method.

The single salt of La is not particularly limited, and oxides and/or hydroxides of lanthanum may be mentioned. The single salt of Ti is not particularly limited, and oxides and/or hydroxides of titanium may be mentioned. The single salt of Li is not particularly limited, and for example, lithium carbonate, lithium chloride, lithium fluoride, lithium hydroxide, lithium nitrate, lithium acetate, and their hydrates may be mentioned.

Further, the average particle diameter of the particles of the single salt of Ti is preferably no greater than 100 nm, more preferably no greater than 50 nm, and particularly preferably no greater than 30 nm. If the particles of the single salt of Ti are within the above range, the conversion of Li and Ti into a composite salt during the solvothermal treatment will readily proceed.

### [Drying Step]

After this, the precursor obtained in the solvothermal treatment step may be dried. As the conditions for the drying step, for example, 60ºC to 250ºC, and 1 hr to 10 hr may be mentioned.

### EXAMPLES

Below, the present invention is specifically explained by examples, but the present invention is not in any way limited by these examples.

### [Example 1]

### (1) Preparation of the Precursor

### (Simultaneous Precipitation Treatment Step)

Lanthanum chloride heptahydrate was dissolved in water and the obtained solution was mixed with a titanium tetrachloride aqueous solution, and an aqueous solution with an La concentration of 0.50 mmol/g, a Ti concentration of 2.60 mmol/g, and a Cl concentration of 8.23 mmol/g was obtained. The La/Ti ratio at this time was 0.192 (mol ratio). This aqueous solution was transparent, and even when left at room temperature, no precipitate occurred.
350 g of this aqueous solution was sprayed into 500 g of 28 mass% ammonia water and a precipitate was generated. This precipitate was isolated, washed with water, dried at 200ºC, and mechanically crushed. Upon carrying out a powder X-ray diffraction measurement of this precipitate using the CuK α line, as shown in FIG. 5 (precipitate), notable diffraction peaks could not be recognized.

### (Hydrothermal Synthesis Treatment)

9.31 g of the above mentioned precipitate was introduced into a pressure resistant vessel, and 39.58 mL of 4N lithium hydroxide aqueous solution (equivalent to 0.158 mol of lithium hydroxide) was added. The above mentioned pressure resistant vessel was sealed, and hydrothermal treatment was carried out by heating for 12 hours in a constant temperature bath set to 120ºC. Further, 6.17 mL of acetic acid was added, and hydrothermal treatment was carried out for 12 hr at 180ºC. After allowing to cool, the precipitate was separated, and after washing with a liquid of an equal volume mixture of water and 2-propanol, a solid precursor was obtained by drying at 200ºC. A powder X-ray diffraction measurement was carried out on the obtained precursor, and as shown in FIG. 5 (precursor), a diffraction line of a composite salt of Li and Ti attributed to (Li₂TiO₃)_{1.333} [ICDD No. 01--75-0614] was detected.

### [Example 1-1]

### (2) Preparation of the Sintered Body

### (Molding Step)

A part of the obtained precursor was loaded into a die with a diameter of 13 mm, and pressed into a pellet form at 740 MPa, and a molded body was obtained.

### (Sintering Step)

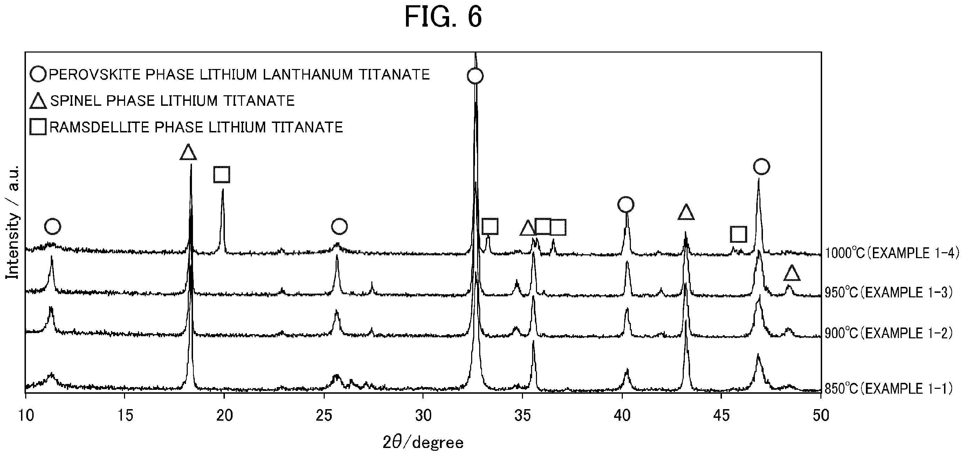

The molded body was sintered in air, at a sintering temperature of 850ºC and with a holding time of 12 hr, and a sintered body with a thickness of 500 pm was obtained. Further, the sintered body was pulverized and a powder X-ray diffraction measurement was carried out using the CuK α line, and as shown in FIG. 6 (Example 1-1), a diffraction line corresponding to a spinel phase of lithium titanate and a perovskite phase of lithium lanthanum titanate was detected.

### [Examples 1-2 to 1-5]

The sintered bodies of Examples 1-2 to 1-5 were prepared in the same way as Example 1-1, other than changing the sintering temperatures to 900ºC, 950ºC, 1000ºC, and 1050ºC.

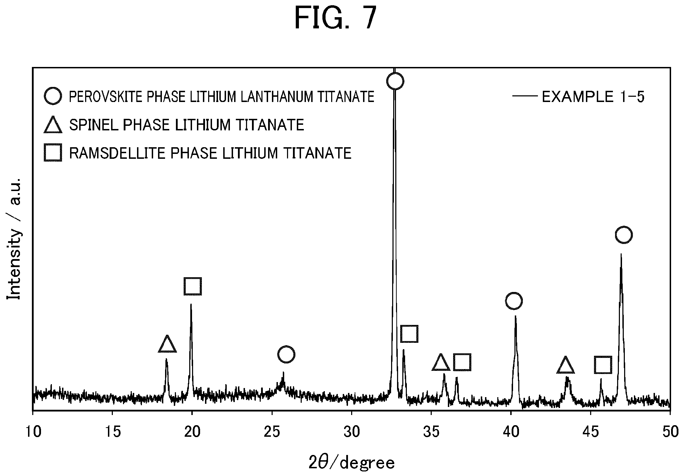

Powdered X-ray diffraction measurements were carried out by the same method as Example 1-1 for the sintered bodies of Examples 1-2 to 1-5. The results for Examples 1-2 to 1-4 are shown in FIG. 6, and the results for Example 1-5 are shown in FIG. 7. In Examples 1-2 and 1-3, diffraction lines corresponding to a spinel phase of lithium titanate and a perovskite phase of lithium lanthanum titanate were detected. In Examples 1-4 and 1-5, diffraction lines corresponding to a spinel phase of lithium titanate and a ramsdellite phase of lithium titanate and a perovskite phase of lithium lanthanum titanate were detected.

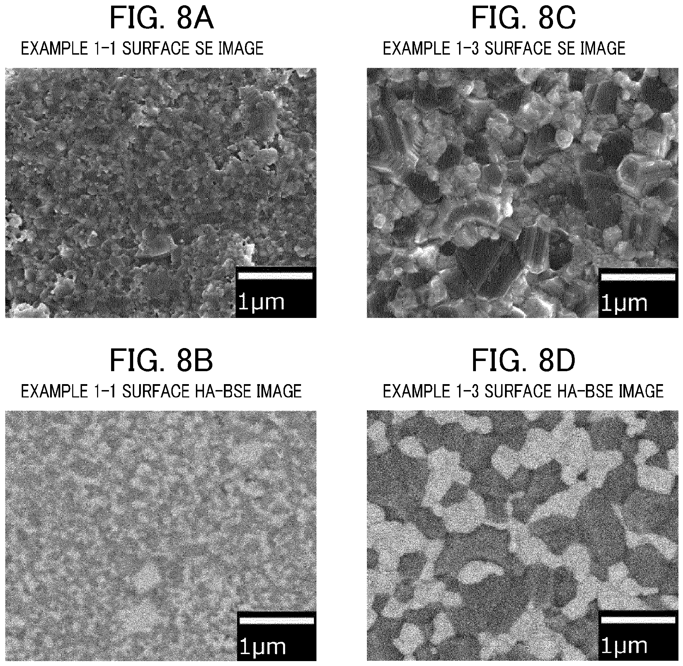

The results of observing the surface of the sintered bodies of Examples 1-1 and 1-3 by a scanning electron microscope are shown in FIGs. 8A to 8D. Upon comparing FIGs. 8A to 8D, compared to Example 1-1 which was sintered at 850ºC, the example sintered at 950ºC had a larger crystal grain size, and the actual density also increased from 3.3 g/cm³ to 3.6 g/cm³. Further, in FIGs. 8B and 8D, the bright regions are regions containing much La, namely, there are crystal grains of a lithium lanthanum titanate phase, and the dark regions have crystal grains of a lithium titanate phase having little La, and the crystal grains are joined to each other.

### [Examples 2-1 to 2-4]

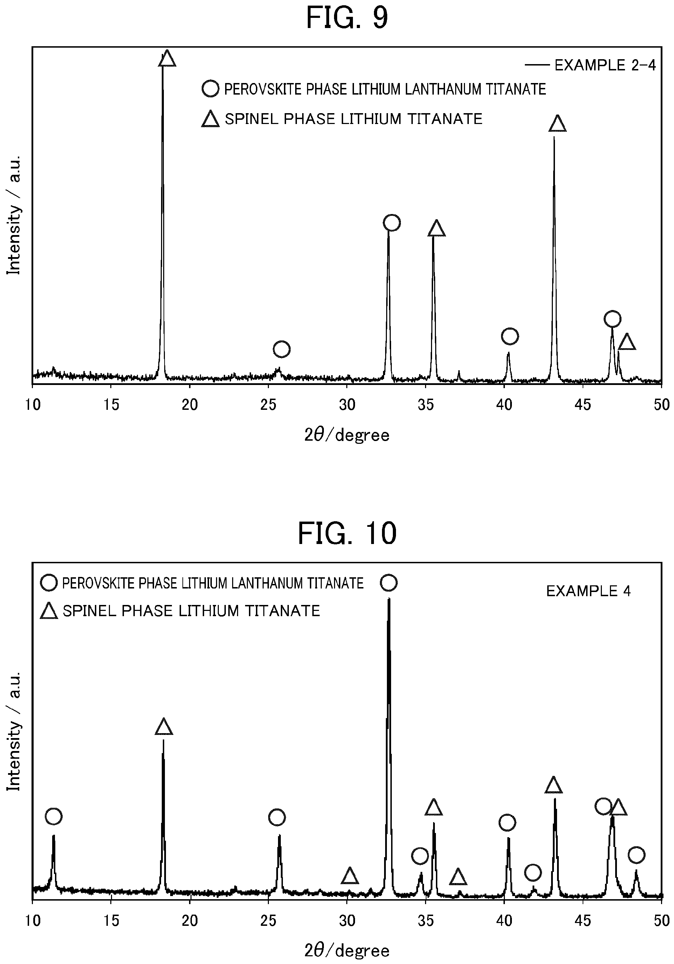

The sintered bodies of Examples 2-1 to 2-4 were prepared in the same way as Example 1, except that lanthanum chloride heptahydrate was dissolved in water and the obtained solution was mixed with a titanium tetrachloride aqueous solution, to prepare a solution with a La/Ti ratio of 0.065 (mol ratio). Powder X-ray diffraction measurement by the same method of Example 1-1 was also carried out for the sintered body of Example 2-4. The results are shown in FIG. 9. For all of Examples 2-1 to 2-4, diffraction lines corresponding to a spinel phase of lithium titanate and a perovskite phase of lithium lanthanum titanate were also detected.

### [Example 3-1]

A precursor was obtained by the same method as Example 1. The precursor was provisionally fired at 800ºC for 5 hr, and a provisional fired body was obtained. The provisional fired body was put in a zirconia ball mill jar, a zirconia ball and 2-propanol were added, and planetary ball mill treatment was carried out at 300 rpm for 12 hr. The obtained powder was separated from the ball and the 2-propanol, and dried at 200ºC, to obtain a provisionally fired pulverized body. A part of the obtained provisionally fired pulverized body was loaded into a die with a diameter of 13 mm, and press molded into a pellet form at 740 MPa. The molded body was sintered in air at 950ºC for 12 hr, and a sintered body having a thickness of 500 pm was obtained. Powder X-ray diffraction measurement by the same method as Example 1-1 was also carried out for the sintered body of Example 3-1. The results thereof confirmed that also in Example 3-1, both of a spinel phase of lithium titanate and a perovskite phase of lithium lanthanum titanate were formed.

### [Example 3-2]

A sintered body was obtained by the same method as Example 3-1, except that when obtaining the provisionally fired body, the provisional firing temperature was 400ºC. It was confirmed that also in Example 3-2, both of a spinel phase of lithium titanate and a perovskite phase of lithium lanthanum titanate were formed.

### [Example 4]

As an example of a production method which does not apply a hydrothermal synthesis method, a sintered body was obtained by the following procedure. First, a powder of perovskite phase lithium lanthanum titanate was produced by the following procedure. Using lithium carbonate as a lithium source, lanthanum oxide as a lanthanum source, and titanium dioxide as a titanium source (mol ratio Li:La:Ti = 0.35:0.56:1.000), these were weighed and put into a zirconia ball mil jar (a drying treatment was applied to each of the sources). A zirconia ball and 2-propanol were added, and planetary ball mill treatment was carried out at 400 rpm for 2 hr. After this, the solvent was evaporated by drying at 200ºC for 3 hr, and the powder was pulverized and mixed in an agate mortar and the precursor was obtained. The precursor was provisionally fired at 1150ºC for 2 hr and a provisionally fired body was obtained. The obtained provisionally fired body was put into a zirconia ball mill jar, a zirconia ball was added, a dry planetary ball mill treatment was carried out at 400 rpm for 1 hr, and after this 2 propanol was added and treatment was further carried out at 400 rpm for 1 hr. The solvent was evaporated by drying at 200ºC for 3 hr, and the powder was pulverized and mixed in an agate mortar, fired at 1350ºC for 6 hr, and a fired body was obtained. On carrying out a powder X-ray diffraction measurement using the CuK α line, a peak of perovskite phase lithium lanthanum titanate was confirmed. Next, the obtained powder of perovskite phase lithium lanthanum titanate and a powder of spinel phase lithium titanate (Wako Pure Chemical Industries, Ltd.) were mixed in a zirconia ball mill using a zirconia ball for 12 hr, and a precursor was obtained. La/Ti was 0.192. A part of the obtained precursor was loaded into a die with a diameter of 13 mm, and press molded into a pellet form at 740 MPa. The precursor was sintered in air at 950ºC for 12 hr, and a sintered body having a thickness of 500 pm was obtained. Powder X-ray diffraction measurement by the same method of Example 1-1 was also carried out for the sintered body of Example 4. The results are shown in FIG. 10. It was confirmed that also in Example 4, both of a spinel phase of lithium titanate and a perovskite phase of lithium lanthanum titanate were formed.

### [Examples 5-1 to 5-3]

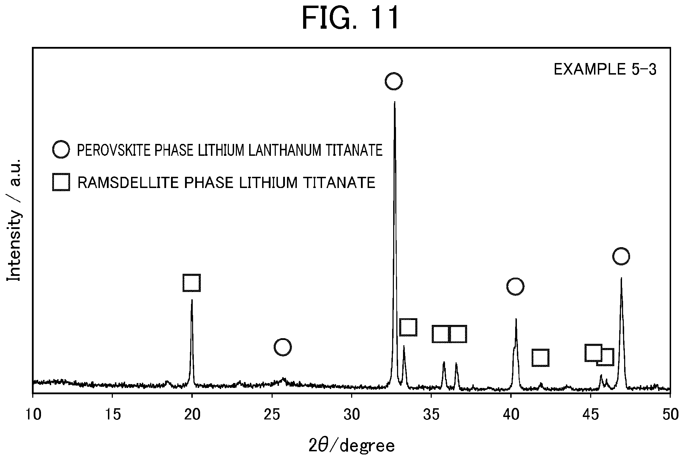

The sintered bodies of Examples 5-1 to 5-3 were obtained in the same way as Example 1-1, except that the sintering temperature and holding time were respectively (1100ºC, 10 min), (1050ºC, 0 min), and (1200ºC, 0 min). In Examples 5-1 and 5-2, diffraction lines corresponding to a spinel phase of lithium titanate and a ramsdellite phase of lithium titanate and a perovskite phase of lithium lanthanum titanate were detected. The powder X-ray diffraction measurement results of Example 5-3 are shown in FIG. 11. In Example 5-3, diffraction lines corresponding to a ramsdellite phase of lithium titanate and a perovskite phase of lithium lanthanum titanate were detected.

### [Example 6]

The sintered bodies of Examples 6-1 and 6-2 were prepared in the same way as Example 1-1, except that the amount of the precursor used in the molding step was one fourth, and the sintering temperatures and their holding times were (950ºC, 12 hr) and (1150ºC, 0 min). The thicknesses of all obtained sintered bodies was 130 pm. In Example 6-1, diffraction lines corresponding to a spinel phase of lithium titanate and a perovskite phase of lithium lanthanum titanate were detected. In Example 6-2, diffraction lines corresponding to a spinel phase and a ramsdellite phase of lithium titanate and a perovskite phase of lithium lanthanum titanate were detected.

### [Example 7]

The precursor obtained by the method disclosed in Example 1, along with polyvinyl butyral as a binder, was dispersed in a mixed solution of toluene and isopropyl alcohol of a volume ratio of 2:1, and a slurry was formed. This was coated onto a PET film, dried at 120ºC for 10 min, and after pressing at 440 MPa using a hot plate press at 80ºC, the PET film was separated, and the binder was eliminated by heating at 500ºC for 2 hr. After this, it was sintered at 1150ºC with a holding time of 2 hr, and a sintered body with a thickness of 30 pm was obtained. Further, as a result of carrying out powder X-ray diffraction measurement of a part of this sintered body sheet, diffraction lines corresponding to a ramsdellite phase of lithium titanate and a perovskite phase of lithium lanthanum titanate were detected.

### [Comparative Example 1]

A powder of lithium titanate (Wako Pure Chemical Industries, Ltd.) was loaded into a die with a diameter of 13 mm, and press molded into a pellet form at 740 MPa. The molded body was sintered in air at 950ºC for 12 hrs, and a sintered body with a thickness of 500 pm was obtained.

### [Comparative Example 2]

The sintered body of Comparative Example 2 was obtained in the same way as Comparative Example 1, except that the amount of the lithium titanate powder inserted ito the die was one fourth. The thickness of the obtained sintered body was 130 pm.

### [Comparative Example 3]

The sintered body of Comparative Example 3 was obtained in the same way as Example 7, except that a sintering temperature and holding time of a powder of lithium titanate (Wako Pure Chemical Industries, Ltd.) was 950ºC, and 12 hr. The thickness of the obtained sintered body sheet was 10 pm. Method of Evaluation

### [Evaluation of the Actual Density]

For the obtained sintered bodies, the actual density was determined by dividing the dry mass by the volume determined from the actual size.

### [Electric Charging and Discharging Tests and Lithium Ion Conductivity Measurement]

Using the sintered bodies of Examples 1-3, 1-5, 2-3, 3-2, and 5-1 to 5-3, electric charging and discharging tests and lithium ion conductivity measurements were carried out using an electrolyte cell for testing. Further, for reference, electric charging and discharging tests using an electrolyte cell were also carried out for the sintered body of Comparative Example 1. Using the sintered bodies of Examples 6-1 and 6-2, and Comparative Example 2, electric charging and discharging tests and lithium ion conductivity measurements were carried out using an all-solid cell for testing. Electric charging and discharging tests were also carried out for the sintered body sheets of Example 7 and Comparative Example 3 using an all-solid cell for testing.

### [Electric Charging and Discharging Tests Using Electrolyte Cell for Testing]

The electrolyte cell for testing was produced inside a glove box. Gold was deposited on one face of a sintered body test piece, and with the deposited face as downwards, was mounted on the lower portion of the cell cladding made of stainless steel. On top of this, a separator and a positive electrode were stacked in sequence, completely immersed in an electrolyte solution, the upper portion of the cell cladding was covered, and a compressional stress was applied to the laminate body of the sintered body/separator/positive electrode and was sealed in this form. Further, at the electrolyte, a solution where LiPF₆ was dissolved to a density of 1 mol/L in a mixed solvent of a 3:7 volume ratio of ethylene carbonate and ethyl methyl carbonate was used, and at the positive electrode side, a mixture of a 85:10:5 ratio (mass ratio) of lithium phosphate and carbon and polytetrafluoroethylene was used. The electric charging and discharging was carried out at a temperature of 25ºC, with a constant current of 0.1 mA/cm², the upper limit cutoff voltage was set at 2.3 V, and the lower limit cutoff voltage was set at 1.0 V.

### [Electric Charging and Discharging Tests Using All-Solid Cell for Testing]

The all-solid cell for testing was prepared inside a glove box. Polyethylene oxide having a weight-average molecular weight of 600,000, and lithium bis(trifluoromethane sulfonyl)imide with a mass ratio of 35% with respect to the polyethylene oxide were mixed in acetonitrile, and this was coated on an upper face and periphery of a sintered body whose lower face was deposited with gold. After this, reduced pressure drying was carried out at 130ºC for 12 hr, and by completely eliminating the acetonitrile, a laminate body of a dry polymer electrolyte material and a sintered body was obtained. The dry polymer electrolyte material side of this laminate body was closely adhered to metal lithium, and by sealing in a coin-type container, a coin-type all-solid cell for testing with a sintered body as a positive electrode, a dry polymer electrolyte material as an all-solid electrolyte material, and metallic lithium as a negative electrode was prepared, and electric charging and discharging testing was carried out at 60ºC. The electric charging and discharging was carried out started from discharging, at a fixed current of 0.02 mA/cm2, the upper limit of the cutoff voltage was set at 2.5 V, and the lower limit of the cutoff voltage was set at 1.25 V.

### [Measurement of the Lithium Ion Conductivity]

The cell for measurement was prepared inside a glove box. Metal lithium foil was placed on the lower portion of a cell cladding of stainless steel, and on top of this a separator soaked in electrolyte solution, a sintered body test piece, a separator soaked in electrolyte solution, and metal lithium foil were stacked in this sequence, the cell cladding upper portion was covered, and sealed in a form of applying compressive stress to the laminate body of the metal lithium foil/separator/sintered body test piece/separator/metal lithium foil positive electrode. Further, for the electrolyte, a solution of LiClO4 dissolved at a concentration of 1 mol/L in a isovolumic mixed solution of ethylene carbonate and diethyl carbonate was used. The measurement was carried out at 25ºC. An impedance analyzer was used in the measurement (frequency 1 Hz to 32 MHz, amplitude voltage 100 mV), a resistance value was determined by the arc of the Nyquist plot, and the lithium ion conductivity was calculated from this resistance value.

A series of evaluation results are shown in Table 1, Table 2, and Table 3. Further, the initial charging capacity and initial discharging capacity of Table 2 are values measured using an electrolyte cell for testing, and the initial charging capacity and initial discharging capacity of Table 3 are values measured using an all-solid cell for testing. Further, each capacity was divided by the dry mass of the sintered body, and is shown as a capacity per unit mass of the sintered body.

**[Table 1]**

| | Method of preparing powder for molding | La/Ti [mol ratio] | Sintering temperature [ºC] | Holding time | Actual density [kg/L] | Crystal phase |
|---|---|---|---|---|---|---|
| Example 1-1 | Two-step hydrothermal | 0.192 | 850 | 12 h | 3.3 | Spinel phase + perovskite phase |
| Example 1-2 | Two-step hydrothermal | 0.192 | 900 | 12 h | 3.4 | |
| Example 1-3 | Two-step hydrothermal | 0.192 | 950 | 12 h | 3.6 | |
| Example 1-4 | Two-step hydrothermal | 0.192 | 1000 | 12 h | 3.6 | Spinel phase + ramsdellite phase + perovskite phase |
| Example 1-5 | Two-step hydrothermal | 0.192 | 1050 | 12 h | 3.7 | |
| Example 2-1 | Two-step hydrothermal | 0.065 | 850 | 12 h | 3.3 | Spinel phase + perovskite phase |
| Example 2-2 | Two-step hydrothermal | 0.065 | 900 | 12 h | 3.3 | |
| Example 2-3 | Two-step hydrothermal | 0.065 | 950 | 12 h | 3.3 | |
| Example 2-4 | Two-step hydrothermal | 0.065 | 1000 | 12 h | 3.3 | |
| Example 3-1 | Two-step hydrothermal + provisional firing (800ºC) | 0.192 | 950 | 12 h | 3.8 | |
| Example 3-2 | Two-step hydrothermal + provisional firing (400ºC) | 0.192 | 950 | 12 h | 3.6 | |
| Example 4 | Solid phase | 0.192 | 950 | 12 h | 3.5 | |
| Example 5-1 | Two-step hydrothermal | 0.192 | 1100 | 10 min | 3.8 | Spinel phase + ramsdellite phase + perovskite phase |
| Example 5-2 | Two-step hydrothermal | 0.192 | 1050 | 0 min | 3.7 | |
| Example 5-3 | Two-step hydrothermal | 0.192 | 1200 | 0 min | 3.8 | Ramsdellite phase + perovskite phase |
| Example 6-1 | Two-step hydrothermal | 0.192 | 950 | 12 h | 3.9 | Spinel phase + perovskite phase |
| Example 6-2 | Two-step hydrothermal | 0.192 | 1150 | 0 min | 3.9 | Spinel phase + ramsdellite phase + perovskite phase |
| Example 7 | Two-step hydrothermal | 0.192 | 1150 | 2 h | 3.7 | Ramsdellite phase + perovskite phase |
| Comparative Example 1 | LTO powder only | 0 | 950 | 12 h | 3.4 | Spinel phase |

**[Table 2]**

| | Method of preparing powder for molding | La/Ti [mol ratio] | Sintering temperature [ºC] | Holding time | Actual density [kg/L] | Li ion conductivity [S/cm] | Initial charging capacity [mAh/g] | Initial discharging capacity [mAh/gl |
|---|---|---|---|---|---|---|---|---|
| Example 1-3 | Two-step hydrothermal | 0.192 | 950 | 12 h | 3.6 | 9.4 × 10⁻⁶ | 56 | 50 |
| Example 1-5 | Two-step hydrothermal | 0.192 | 1050 | 12 h | 3.7 | 1.5 × 10⁻⁵ | 77 | 65 |
| Example 2-3 | Two-step hydrothermal | 0.065 | 950 | 12 h | 3.2 | 8.3 × 10⁻⁸ | 31 | 24 |
| Example 3-2 | Two-step hydrothermal + provisional firing | 0.192 | 950 | 12 h | 3.6 | 2.3 × 10⁻⁸ | 83 | 70 |
| Example 4 | Solid phase | 0.192 | 950 | 12 h | 3.5 | 2.9 × 10⁻⁶ | 69 | 58 |
| Example 5-1 | Two-step hydrothermal | 0.192 | 1100 | 10 min | 3.8 | 2.1 × 10⁻⁵ | 89 | 79 |
| Example 5-2 | Two-step hydrothermal | 0.192 | 1050 | 0 min | 3.7 | 4.9 × 10⁻⁶ | 94 | 88 |
| Example 5-3 | Two-step hydrothermal | 0.192 | 1200 | 0 min | 3.8 | 1.3 × 10⁻⁵ | 88 | 78 |
| Comparative Example 1 | LTO powder only | 0 | 950 | 12 h | 3.4 | 9 3.8 × 10⁻⁹ | 0.67 | 0.15 |

**[Table 3]**

| | Method of preparing powder for molding | La/Ti [mol ratio] | Sintering temperature [ºC] | Holding time | Actual density [kg/L] | Sintered body thickness [µm] | Li ion conductivity [S/cm] | Initial discharging capacity [mAh/g] | Initial charging capacity [mAh/g] |
|---|---|---|---|---|---|---|---|---|---|
| Example 6-1 | Two-step hydrothermal | 0.192 | 950 | 12 h | 3.9 | 130 | 1 × 10⁻⁵ | 24 | 19 |
| Example 6-2 | Two-step hydrothermal | 0.192 | 1150 | 0 min | 3.9 | 130 | 2 × 10⁻⁵ | 62 | 59 |
| Example 7 | Two-step hydrothermal | 0.192 | 1150 | 2 h | 3.7 | 30 | - | 70 | 66 |
| Comparative Example 2 | LTO powder only | 0 | 950 | 12 h | 3.4 | 130 | 4 × 10⁻⁹ | <1 | <1 |
| Comparative Example 3 | LTO powder only | 0 | 950 | 12 h | 3.2 | 10 | - | 5 | 5 |

| | | | | | | | | | |
|---|---|---|---|---|---|---|---|---|---|
| -: unmeasured | | | | | | | | | |

Upon comparing Examples 1-1 to 1-5 and 5-1 to 5-3, it can be understood that at sintering temperatures of 1000ºC or more, lithium titanate having a ramsdellite-type crystal structure is generated, and in Example 5-3 where the sintering temperature is 1200ºC, lithium titanate having a spinel-type crystal structure was practically not observed.

The sintered bodies comprising lithium titanate and lithium lanthanum titanate of Examples 1-3, 1-5, 2-3, 3-2, 4, and 5-1 to 5-3 obtained by the present invention can be electrically charged and discharged in an electrolyte-type cell. Also in Examples 5-1 to 5-3 which had a short holding time at the sintering temperature, a sintered body was sufficiently obtained, and in addition to saving energy, this is preferable in the point that a long time exposure to a high temperature environment which invites changes in the composition and coarsening of the grain diameter is not necessary. On the other hand, Comparative Example 1 which is a sintered body of only lithium titanate, and because it does not include an all-solid electrolyte material, and further, an electrolyte solution has not permeated to the inside of the compacted sintered body, there was no conductive path of the lithium titanate inside the sintered body, and therefore, it was almost not possible to electrically charge and discharge.

The sintered bodies with a thickness of 130 pm comprising lithium titanate and lithium lanthanum titanate of Examples 6-1 and 6-2, and sintered sheet with a thickness of 30 pm comprising lithium titanate and lithium lanthanum titanate of Example 7 obtained by the present invention, without using an electrolyte solution, were capable of electric charging and discharging in a all-solid battery using a dry polymer as an all-solid electrolyte material. Further, Comparative Examples 2 and 3, which are sintered bodies of only a powder of lithium titanate, in the same way as the electric charging and discharging test using an electrolyte cell, it was almost not possible to electrically charge and discharge in an electric charging and discharging test using an all-solid cell.

## Claims

1. A sintered body comprising a lithium titanate having a spinel-type crystal structure and/or a lithium titanate having a ramsdellite-type crystal structure, and
a lithium lanthanum titanate having a perovskite-type crystal structure.

2. The sintered body according to claim 1 wherein a mol ratio of titanium and lanthanum included in the sintered body is La/Ti = 0.0001 to 0.66.

3. The sintered body according to claim 1 or 2, wherein a mol ratio of titanium and lanthanum included in the sintered body is La/Ti = 0.05 to 0.2.

4. The sintered body according to any one of claims 1 to 3, wherein an actual density of the sintered body is no less than 2.5 g/cm³.

5. The sintered body according to any one of claims 1 to 4, wherein a lithium ion conductivity of the sintered body at 25ºC is no less than 1 x 10⁻⁸ S/cm.

6. The sintered body according to any one of claims 1 to 5, wherein the sintered body has a plate form or sheet form, with a thickness of no less than 3 pm.

7. The sintered body according to claim 6, wherein a diameter of a crystal grain of the lithium titanate constituting the sintered body, and a diameter of a crystal grain of the lithium lanthanum titanate constituting the sintered body are each no greater than 1/3 of the thickness of the sintered body.

8. The sintered body according to any one of claims 1 to 7, wherein when the sintered body processed to a thickness of 500 pm is taken as a negative electrode or positive electrode, in a cell using an electrolyte, an initial charging capacity and/or initial discharging capacity of the sintered body when electric charging and discharging tested at a rate of 0.1 mA/cm² is no less than 10 mAh/g.

9. The sintered body according to any one of claims 1 to 7, wherein when the sintered body processed to a thickness of 10 pm to 150 pm is taken as a negative electrode or positive electrode, in an all-solid type cell using a solid electrolyte material, an initial charging capacity and/or initial discharging capacity of the sintered body when electric charging and discharging tested at a rate of 0.02 mA/cm² at a temperature of 60ºC is no less than 10 mAh/g.

10. A lithium battery comprising a negative electrode which absorbs and emits lithium and a positive electrode which absorbs and emits lithium, the negative electrode and the positive electrode facing each other via a separator and being disposed in an electrolyte solution, wherein
the sintered body according to claim 1 is used as the negative electrode or the positive electrode.

11. An all-solid lithium battery comprising a negative electrode layer which absorbs and emits lithium, a solid electrolyte material layer which conducts lithium, and a positive electrode layer which absorbs and emits lithium, the negative electrode layer, the solid electrolyte material layer, and the positive electrode layer being laminated in this sequence, wherein
the sintered body according to claim 1 is used as the negative electrode layer or the positive electrode layer.

12. A method for producing the sintered body according to claim 1, comprising
a step of obtaining a molded body by molding a powder of a mixture of a precursor of lithium titanate, and a precursor of lithium lanthanum titanate, and
a sintering step of sintering the molded body.

13. A method for producing the sintered body according to claim 1, comprising
a step of obtaining a provisionally fired body by provisionally firing a mixture of a precursor of lithium titanate, and a precursor of lithium lanthanum titanate,
a step of obtaining a molded body by molding a powder of the provisionally fired body, and
a sintering step of sintering the molded body.

14. The method for producing the sintered body according to claim 12 or 13, wherein the mixture of a precursor of lithium titanate, and a precursor of lithium lanthanum titanate is obtained by
a simultaneous precipitation treatment step of obtaining a precipitate comprising an oxide and/or hydroxide of La, and an oxide and/or hydroxide of Ti, by mixing an aqueous solution comprising La and Ti, and a basic aqueous solution, and
a step of obtaining a mixture of a precursor of lithium titanate, and a precursor of lithium lanthanum titanate by solvothermal treatment of a mixture comprising the precipitate, an Li source, and a solvent.

15. The method for producing the sintered body according to claim 12 or 13, wherein the mixture of a precursor of lithium titanate, and a precursor of lithium lanthanum titanate is obtained by
a simultaneous precipitation treatment step of obtaining a precipitate comprising an oxide and/or hydroxide of La, and an oxide and/or hydroxide of Ti, by mixing an aqueous solution comprising La and Ti, and a basic aqueous solution,
a first solvothermal treatment step of a performing a solvothermal treatment of a mixture comprising the precipitate, an Li source, and a solvent, and
a second solvothermal treatment step of obtaining a mixture of a precursor of lithium titanate, and a precursor of lithium lanthanum titanate by further adding an acid, and performing a solvothermal treatment.

16. The method for producing the sintered body according to claim 12 or 13, wherein, in the sintering step, the sintering temperature is no less than 1000ºC, and
a sintered body comprising a lithium titanate having a ramsdellite-type crystal structure is obtained.

17. A method for producing the sintered body according to claim 1, comprising
a step of obtaining a molded body by molding a powder of a mixture of lithium titanate and lithium lanthanum titanate, and
a sintering step of sintering the molded body.
